(19) Europäisches Patentamt
European Patent Office
Office européen des brevets

(11) Veröffentlichungsnummer: **0 066 232**
**B1**

(12) **EUROPÄISCHE PATENTSCHRIFT**

(45) Veröffentlichungstag der Patentschrift: **31.07.85**

(51) Int. Cl.⁴: **C 07 F 7/10**

(21) Anmeldenummer: **82104540.8**

(22) Anmeldetag: **25.05.82**

# (54) Verfahren zur Herstellung von Silylisocyanaten.

(30) Priorität: **03.06.81 DE 3122014**

(43) Veröffentlichungstag der Anmeldung:
**08.12.82 Patentblatt 82/49**

(45) Bekanntmachung des Hinweises auf die Patenterteilung:
**31.07.85 Patentblatt 85/31**

(84) Benannte Vertragsstaaten:
**BE DE FR GB IT**

(56) Entgegenhaltungen:
**DE - B - 1 162 367**
**US - A - 2 559 340**
**US - A - 4 176 131**

**HOUBEN-WEYL "Methoden der organischen Chemie" 4. Auflage, Band XIII/5**

(73) Patentinhaber: **BAYER AG, Konzernverwaltung RP Patentabteilung, D-5090 Leverkusen 1 Bayerwerk (DE)**

(72) Erfinder: **Fauss, Rudolf, Dr., Gerstenkamp 10, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Die vorliegende Erfindung betrifft ein Verfahren zur Herstellung von Silylisocyanaten durch drucklose Umsetzung von Silylhalogeniden mit Harnstoff in polaren Lösungsmitteln.

Zur Herstellung von Silylisocyanaten sind mehrere Wege bekannt (siehe Houben—Weyl, 13/5, S. 126 ff. [1980]). Gemäß DE-OS 1 965 741 gelingt die Herstellung dieser Verbindungen durch Umsetzung von Silylhalogeniden mit Salzen der Cyansäure. Auch der Versuch, anstelle der Cyansäuresalze Harnstoff einzuzusetzen, wurde bereits gemacht. So haben J. Goubeau und D. Paulin (Ber. 93, 1111 [1960]) in ihrer Arbeit über die Synthese von Silylisocyanaten die Umsetzung von Silylchloriden mit Harnstoff untersucht. Da Harnstoff erst ab ca. 130°C Isocyansäure abspaltet und bei dieser Temperatur die einzusetzenden Silylchloride bei Normaldruck bereits gasförmig vorliegen, mußten die Autoren die Umsetzung unter Druck vornehmen. Sie kamen zu dem Ergebnis, daß die Reaktion des Trimethylsilylchlorids mit Harnstoff bei 240°C einsetzt und bei 300±20°C innerhalb 4—5 Stunden eine maximale Ausbeute von 65—75% der Theorie an Trimethylsilylisocyanat erhalten wird. Die Umsetzung von Dimethylsilyldichlorid mit Harnstoff lieferte höchstens 5—10% Dimethylsilyldiisocyanat. Als Nebenprodukte der Reaktion fanden die Autoren größere Mengen an $[(CH_3)_2SiO]_3$ und $[(CH_3)_2SiO]_4$ sowie Biuret, Ammoniumcyanat, Cyanursäure und Tricyanharnstoff. Dies bedeutet, daß ein beträchtlicher Teil der Ausgangsverbindungen zu nicht mehr recyclisierbaren Nebenprodukten reagiert.

Es muß daher als ausgesprochen überraschend angesehen werden, daß nach dem nachstehend näher beschriebenen erfindungsgemäßen Verfahren Silylisocyanate in druckloser Reaktion in hohen Ausbeuten herstellbar sind. Ein besonderer Vorteil des erfindungsgemäßen Verfahrens ist auch darin zu sehen, daß bei Verwendung von mindestens zwei Halogenatomen aufweisenden Halogensilanen als Ausgangsmaterial eine stufenweise Substitution der Halogenatome durch Isocyanatgruppen möglich ist, so daß das erfindungsgemäße Verfahren auch die Herstellung von Halogen-substituierten Silylisocyanaten gestattet.

Gegenstand der vorliegenden Erfindung ist ein Verfahren zur Herstellung von Silylisocyanaten der allgemeinen Formel

$$R_aSi(NCO)_bHal_c$$

in welcher

R für einen gegebenenfalls inerte Substituenten aufweisenden, gegebenenfalls olefinisch ungesättigten aliphatischen Kohlenwasserstoffrest mit insgesamt 1 bis 18 Kohlenstoffatomen, einen gegebenenfalls inerte Substituenten aufweisenden aromatischen Kohlenwasserstoffrest mit insgesamt 6 bis 18 Kohlenstoffatomen, einen gegebenenfalls inerte Substituenten aufweisenden araliphatischen Kohlenwasserstoffrest mit insgesamt 7 bis 18 Kohlenstoffatomen, einen gegebenenfalls inerte Substituenten aufweisenden cycloaliphatischen Kohlenwasserstoffrest mit insgesamt 5 bis 18 Kohlenstoffatomen, einen Alkoxyrest mit 1 bis 18 Kohlenstoffatomen oder einen Aroxyrest mit 6 bis 18 Kohlenstoffatomen steht,

Hal für Chlor oder Brom steht,

a für eine ganze Zahl von 1 bis 3 steht,

b für eine ganze Zahl von 1 bis 3 steht und

c für eine ganze Zahl von 0 bis 2 steht, wobei

die Summe a + b + c 4 beträgt, dadurch gekennzeichnet, daß man Halogensilane der allgemeinen Formel

$$R_aSiHal_{b+c}$$

in der die Substituenten und Indices die oben angegebene Bedeutung besitzen mit Harnstoff drucklos in polaren Lösungsmitteln bei mindestens 100°C umsetzt.

Beim erfindungsgemäßen Verfahren werden als Ausgangsmaterialien Halogensilane der zuletzt genannten allgemeinen Formel eingesetzt. Vorzugsweise werden beim erfindungsgemäßen Verfahren solche Halogensilane der genannten allgemeinen Formel verwendet, für welche

R für einen gesättigten aliphatischen Kohlenwasserstoffrest mit 1 bis 4 Kohlenstoffatomen und insbesondere für eine Methylgruppe steht,

Hal für Chlor steht und

a,b,c die bereits genannte Bedeutung haben.

Beispiele geeigneter Halogensilane der genannten allgemeinen Formel sind
Methylsilyltrichlorid, Dimethylsilyldichlorid, Trimethylsilylchlorid, Dimethylsilyldibromid, Di-n-butyl-silyldichlorid, Distearyl-silyldichlorid, Di-cyclohexyl-silyldichlorid, Phenyl-silyltrichlorid, Benzyl-silyl-trichlorid oder Dimethyl-ethyl-silylchlorid.

Besonders bevorzugt werden die der genannten allgemeinen Formel entsprechenden Methylchlorsilane eingesetzt.

Reaktionspartner für die beispielhaft genannten Halogensilane ist Harnstoff.

Die Umsetzung zwischen den Reaktionspartnern wird in Gegenwart von polaren Lösungsmitteln oder von im wesentlichen aus polaren Lösungsmitteln bestehenden Lösungsmittelgemischen durchgeführt. Die Lösungsmittel bzw. die Lösungsmittelgemische sollen bei Normaldruck einen Siedepunkt von mindestens 110°C, vorzugsweise von mindestens 140°C und insbesondere von mindestens 190°C aufweisen. Gut geeignete Lösungsmittel sind Sulfolan und/oder

unter den Reaktionsbedingungen flüssige organische Säureamide wie insbesondere Dimethylformamid, N-Methylpyrrolidon, Tetramethylharnstoff, Tetraethylharnstoff und/oder $\varepsilon$-Caprolactam. Das Lösungsmittel bzw. Lösungsmittelgemisch muß insbesondere ein gutes Lösevermögen für Harnstoff aufweisen, um unerwünschte Nebenreaktionen, insbesondere die Bildung von Cyanursäure, auszuschließen.

Bei der Durchführung des erfindungsgemäßen Verfahrens kommen die Reaktionspartner in solchen Mengen zum Einsatz, daß für jedes Mol an im Halogensilan gebundenem Halogen 0,8 bis 2, vorzugsweise 1 bis 1,5 Mol, Harnstoff zur Verfügung stehen, falls ein vollständiger Ersatz der Halogensubstituenten durch Isocyanato-Substituenten angestrebt wird. Falls aus mehrere Halogenatome aufweisenden Halogensilanen sowohl Isocyanatgruppen als auch Halogensubstituenten aufweisende Silane hergestellt werden sollen, wird vorzugsweise für jedes Mol an durch eine Isocyanatgruppe zu substituierendem Halogen 0,8 bis 1,2, vorzugsweise 1 Mol Harnstoff, eingesetzt.

Die erfindungsgemäße Umsetzung wird im Temperaturbereich von 100°C bis 200°C, vorzugsweise bei 130 bis 160°C, durchgeführt.

Zur Durchführung des erfindungsgemäßen Verfahrens wird im allgemeinen so verfahren, daß man den Harnstoff im Lösungsmittel vorlegt, die Lösung auf ca. 100—120°C vorerhitzt und dann die Halogensilane unter innigem Durchmischen zudosiert, worauf die Reaktionstemperatur weiter gesteigert wird. Das gebildete Silylisocyanat wird vorzugsweise kontinuierlich aus dem Reaktionsgefäß abdestilliert und anschließend fraktioniert. Hierbei anfallende, nicht umgesetzte Halogensilane werden zum Prozeßanfang zurückgeführt. Gegen Ende der Reaktion ist es sinnvoll, die Sumpftemperatur deutlich zu erhöhen (z. B. 180°C), um die Silylisocyanate möglichst vollständig auszutreiben.

Bei der Verwendung von Sulfolan kann es z. B. bei der Herstellung von Trimethylsilylisocyanat gegen Ende der Reaktion angebracht sein mit einem tiefer siedenden Hilfslösungsmittel — z. B. Toluol — bei 170°C Sumpftemperatur das Isocyanat quantitativ auszutreiben.

Bei der Herstellung von Methyltriisocyanatosilan muß nach beendeter Umsetzung das Endprodukt durch Anlegen von Vakuum aus dem Reaktionsgemisch abgetrennt werden.

Die beste Methode der destillativen Abtrennung der Produkte hängt also von deren Siedepunkte und der Lösungsmittel ab und kann durch einen Vorversuch ermittelt werden. Bei der Herstellung von schwerflüchtigen Verfahrensprodukten werden vorzugsweise vergleichsweise niedrig siedende Lösungsmittel wie Dimethylformamid oder N-Methylpyrrolidon eingesetzt. Die Aufarbeitung des Reaktionsansatzes erfolgt in diesen Fällen beispielsweise dergestalt, daß man dem Reaktionsgemisch ein unpolares Lösungsmittel wie beispielsweise Toluol, Xylol, Waschbenzin oder Chlorbenzol hinzufügt, um die Nebenprodukte, insbesondere die gebildeten Ammoniumhalogenide auszufällen. Das von den Ausfällungen befreite Filtrat wird dann durch Abziehen des Lösungsmittels aufgearbeitet, so daß die Verfahrensprodukte als Destillationsrückstand anfallen.

Bei der Herstellung von Halogensubstituenten aufweisenden Isocyanato-silanen, beispielsweise bei der Herstellung von Dimethylchlorisocyanatosilan aus Dimethyldichlorsilan, kann beispielsweise dergestalt verfahren werden, daß man ca. 1 Mol Dichlordimethylsilan bei ca. 140°C zügig in eine Lösung von 1 Mol Harnstoff in Sulfolan eingepumpt und dabei entstehendes Dimethylchlorisocyanatosilan als Hauptprodukt neben unumgesetztem Dimethyldichlorsilan und Dimethyldiisocyanatosilan kontinuierlich abdestilliert. Falls die Bildung von Dimethyldiisocyanatosilan weitgehend unterdrückt werden soll, empfiehlt es sich, das Dichlordimethylsilan, bezogen auf Harnstoff, im Überschuß einzusetzen.

Die Umsetzung erfolgt im allgemeinen unter Verwendung von 4—10molaren, vorzugsweise 6—8molaren Harnstofflösungen in den genannten Lösungsmitteln. Die Lösungsmittel können nach der destillativen Aufarbeitung der Reaktionsansätze destillativ wiedergewonnen werden. Vor dieser destillativen Aufarbeitung der Lösungsmittel können die gebildeten Ammoniumhalogenide durch Filtration entfernt und beispielsweise mit einem apolaren Lösungsmittel, wie z. B. Toluol, ausgewaschen werden.

Die Halogen-freien, als erfindungsgemäße Verfahrensprodukte anfallenden Isocyanatosilane stellen wertvolle Zwischenprodukte für organische Synthesen dar. Beispielsweise eignen sie sich zur Herstellung von Acylisocyanaten durch Umsetzung mit organischen Säurechloriden, wie dies beispielsweise in der SU-PS 498 290 beschrieben ist. Derartige Acylisocyanate stellen wertvolle Trocknungsmittel für Pigmente in feuchtigkeitsempfindlichen Lacken dar. Die als erfindungsgemäße Verfahrensprodukte anfallenden, Halogen-substituierten Isocyanatosilane eignen sich beispielsweise als Polymeradditive, als Additive in Hydraulikflüssigkeiten bzw. in dielektrischen Materialien.

Die in den nachfolgenden Beispielen gemachten Prozentangaben beziehen sich auf Gewichtsprozente.

Beispiel 1

In 400 ml Sulfolan wurden 210 g (3,5 Mol) Harnstoff erhitzt und ab ca. 110°C Sumpftemperatur während 3 Stunden 759 g (7 Mol) Trimethylsilylchlorid in die Sumpfphase zudosiert. Gleichzeitig wird die Temperatur der Lösung allmählich auf ca. 145°C gebracht. Über einen aufgesetzten, auf 100°C beheizten Rückflußkühler wurde Trimethylsilylisocyanat und nicht umgesetztes Trimethylsilylchlorid abgenommen. Nachdem alles Trimethylsilylchlorid zugegeben war, wurde kurz auf 180°C erhitzt. Es wurden 733 g Destillat erhalten, welches laut gaschromatographischer Untersuchung zu 48,6% Trimethylsilylchlorid und 51,4% Trimethylsilylisocyanat bestand.

Durch Absaugen des ausgefallenen Ammonchlorids konnten 370 ml Sulfolan aus dem Sumpf zurückgewonnen werden.

## Beispiel 2

500 ml N-Methylpyrrolidon wurden mit 120 g (2 Mol) Harnstoff versetzt und erhitzt. Ab 100°C wurde langsam 271 g (2,5 Mol) Trimethylsilylchlorid in die Sumpfphase gepumpt; die Temperatur wurde auf 140—150°C gehalten. Über einen auf 100°C beheizten Rückflußkühler wurde Trimethylsilylisocyanat und nicht umgesetztes Trimethylsilylchlorid in eine Vorlage überdestilliert, aus der über eine Kolonne (60 cm, Füllkörper) Trimethylsilylchlorid abdestilliert wurde.

Das so zurückgewonnene Trimethylsilylchlorid wurde wieder zurückgeführt. Der Kreislauf wurde abgebrochen, als keine Bildung von Trimethylsilylisocyanat mehr festgestellt wurde. Der Endpunkt der Reaktion ist leicht an dem sich einstellenden stationären Gleichgewicht in der Silylchlorid/Silylisocyanatabtrennung zu ersehen. Nach fraktionierter Destillation wurden 172 g Trimethylsilylisocyanat (Kp. 91°C) isoliert.

## Beispiel 3

Es wurde wie in Beispiel 2 verfahren, jedoch wurde als Lösungsmittel 450 ml Dimethylformamid verwendet. In der Sumpfphase der Silylchlorid/Silylisocyanattrennung befanden sich nach gaschromatographischer Untersuchung 200 g Trimethylsilylisocyanat.

## Beispiel 4

189 g (3,15 Mol) Harnstoff wurde in 600 ml N-Methylpyrrolidon erhitzt und ab 100°C langsam 325 g (3 Mol) Trimethylsilylchlorid zugepumpt. Nach dem im Beispiel 2 beschriebenen Verfahren wurde nicht umgesetztes Trimethylsilylchlorid zurückgeführt. Gegen Ende der Umsetzung enthielt das zurückgeführte Trimethylsilylchlorid bereits etwas Trimethylsilylisocyanat. Nach Ende der Reaktion wurde die Sumpfphase bis zum Rückfluß des N-Methylpyrrolidons erhitzt, um die Silylverbindungen quantitativ auszutreiben.

Es konnten 320 g Reaktionsprodukt isoliert werden, in welchem sich nach gaschromatographischer Untersuchung 288 g Trimethylsilylisocyanat und 28 g Trimethylsilylchlorid befanden.

## Beispiel 5

420 g (7 Mol) Harnstoff und 1200 ml Sulfolan wurden auf 100°C erhitzt und die Temperatur unter Einleiten von 677 g (5,25 Mol) Dimethyldichlorsilan langsam auf 180°C gesteigert. Über einen auf 180°C beheizten Rückflußkühler werden nicht umgesetztes Ausgangsmaterial und die gebildeten Umsetzungsprodukte abgenommen. In der Vorlage befanden sich nach beendeter Reaktion 530,4 g Flüssigkeit, welche nach gaschromatographischer Untersuchung zu 21% aus Dimethyldichlorsilan, zu 30,3% aus Dimethylchlorisocyanatosilan und zu 46% aus Dimethyldiisocyanatosilan bestand. Die beiden letzten Produkte wurden mittels GC/MS-Kopplung identifiziert. Beim Rektifizieren ergaben sich folgende Siedepunkte:

Dimethylchlorisocyanatosilan 103—105°C
Dimethyldiisocyanatosilan 135—137°C

## Beispiel 6

120 g (2 Mol) Harnstoff wurden in 500 ml Sulfolan erhitzt und ab 120°C 258 g (2 Mol) Dichlordimethylsilan in 1,5 h zugepumpt. Die Sumpftemperatur wurde auf 140°C gesteigert und über einen auf 145°C beheizten Rückflußkühler nicht umgesetztes Ausgangsprodukt und Produkte abgenommen. Gegen Ende der Reaktion wurde die Sumpftemperatur kurz auf 180°C erhöht. Die aufgefangenen 221 g Destillat bestanden laut gaschromatographischer Untersuchung zu 21,7% aus Dimethyldichlorsilan, zu 44,4% aus Dimethylchlorisocyanatosilan und zu 29,2% aus Dimethyldiisocyantosilan.

## Beispiel 7

In eine Lösung aus 180 g (3 Mol) Harnstoff und 500 ml Sulfolan wurde ab 110°C 150 g (1 Mol) Methyltrichlorsilan eingeleitet. Die Reaktion war exotherm und die Innentemperatur stieg bis auf 150°C an. Im Wasserstrahlvakuum wurden 60 g einer farblosen Flüssigkeit bei 58—67°C abdestilliert. Eine GC/MS-Kopplung ergab, daß eine Mischung aus ca. 30% Methylchlordiisocyanatosilan und ca. 70% Methyltriisocyanatosilan vorlag.

## Beispiel 8

60 g (1 Mol) Harnstoff wurden in 400 ml Sulfolan auf 130°C erhitzt und innerhalb von 30 Minuten 168,5 g (1 Mol) Diethoxymethylsilylchlorid zugepumpt. Die Sumpftemperatur wurde dabei auf 145°C gesteigert.

Anschließend wurden im Vakuum (18,66 mbar) die flüchtigen Bestandteile bis 130°C Sumpftemperatur abdestilliert und das Destillat anschließend rektifiziert. Es wurden 100 g Diethoxymethylsilylisocyanat (Kp. 149°C) erhalten.

## Patentansprüche

1. Verfahren zur Herstellung von Silylisocyanaten der allgemeinen Formel

$R_aSi(NCO)_bHal_c$

in welcher

R für einen gegebenenfalls inerte Substituenten aufweisenden, gegebenenfalls olefinisch ungesättigten aliphatischen Kohlenwasserstoffrest mit insgesamt 1 bis 18 Kohlenstoffatomen, einen gegebenenfalls inerte Substituenten aufweisenden aromatischen Kohlenwasserstoffrest mit insgesamt 6 bis 18 Kohlenstoffatomen, einen gegebenenfalls inerte Substituenten aufweisenden araliphatischen Kohlenwasserstoffrest mit insgesamt 7 bis 18 Kohlenstoffatomen, einen gegebenenfalls inerte Substituenten aufweisenden cycloaliphatischen Kohlenwasserstoffrest mit insgesamt 5 bis 18 Kohlenstoffatomen, einen Alkoxyrest mit 1 bis 18 Kohlenstoffatomen oder einen Aroxyrest mit 6 bis 18 Kohlenstoffatomen steht,
Hal für Chlor oder Brom steht,
a für eine ganze Zahl von 1 bis 3 steht,
b für eine ganze Zahl von 1 bis 3 steht und
c für eine ganze Zahl von 0 bis 2 steht, wobei

die Summe a+b+c 4 beträgt, dadurch gekennzeichnet, daß man Halogensilane der allgemeinen Formel

$R_aSiHal_{b+c}$

in der die Substituenten und Indices die oben angegebene Bedeutung besitzen, mit Harnstoff drucklos in polaren Lösungsmitteln bei mindestens 100°C umsetzt.

2. Verfahren gemäß Anspruch 1, dadurch gekennzeichnet, daß man als polares Lösungsmittel Sulfolan und/oder unter den Reaktionsbedingungen flüssige organische Säureamide verwendet.

3. Verfahren gemäß Anspruch 1 und 2, dadurch gekennzeichnet, daß man als Lösungsmittel Sulfolan, Dimethylformamid, N-Methylpyrrolidon, Tetramethylharnstoff und/oder Tetraethylharnstoff verwendet.

4. Verfahren gemäß Anspruch 1 bis 3, dadurch gekennzeichnet, daß man als Halogensilane solche der in Anspruch 1 genannten Formel verwendet, für welche

R für eine Methylgruppe steht,
Hal für Chlor steht und
a,b,c die in Anspruch 1 genannte Bedeutung haben.

## Claims

1. Process for the preparation of silylisocyanates of the general formula

$R_aSi(NCO)_bHal_c$

wherein

R represents an aliphatic hydrocarbon group with a total of 1 to 18 carbon atoms which is optionally olefinically unsaturated and uptionally contains inert substituents, an aromatic hydrocarbon group with a total of 6 to 18 carbon atoms optionally containing inert substituents, an araliphatic hydrocarbon group with a total of 7 to 18 carbon atoms optionally containing inert substituents, a cycloaliphatic hydrocarbon group with a total of 5 to 18 carbon atoms optionally containing inert substituents, an alkoxy group with 1 to 18 carbon atoms or an aroxy group with 6 to 18 carbon atoms,

Hal represents chlorine or bromine,
a represents an integer from 1 to 3,
b represents an integer from 1 to 3, and
c represents an integer from 0 to 2, and

the sum of a+b+c = 4,
characterised in that halogen silanes of the general formula

$R_aSiHal_{b+c}$

in which the substituents and indices have the meaning indicated above are reacted with urea in polar solvents at temperatures of at least 100°C without application of pressure.

2. Process according to claim 1, characterised in that the polar solvent used is sulpholane and/or organic acid amides which are liquid under the reaction conditions.

3. Process according to claims 1 and 2, characterised in that the solvent used is sulpholane, dimethylformamide, N-methylpyrrolidone, tetramethylurea and/or tetraethylurea.

4. Process according to claims 1 to 3, characterised in that the halogen silanes used are those of the formula indicated in claim 1 for which

R represents a methyl group,
Hal represents chlorine and
a, b and c have the meaning indicated in claim 1.

## Revendications

1. Procédé de préparation d'isocyanates de silyle de formule générale:

$R_aSi(NCO)_bHal_c$

dans laquelle

R représente un radical d'hydrocarbure aliphatique comportant éventuellement des substituants inertes, éventuellement à insa-

turation oléfinique et contenant, au total, 1 à 18 atomes de carbone, un radical d'hydrocarbure aromatique comportant éventuellement des substituants inertes et contenant, au total, 6 à 18 atomes de carbone, un radical d'hydrocarbure araliphatique comportant éventuellement des substituants inertes et contenant, au total, 7 à 18 atomes de carbone, un radical d'hydrocarbure cycloaliphatique comportant éventuellement des substituants inertes et contenant, au total, 5 à 18 atomes de carbone, un radical alcoxy contenant 1 à 18 atomes de carbone ou un radical aroxy contenant 6 à 18 atomes de carbone,

Hal représente un atome de chlore ou un atome de brome,

a représente un nombre entier de 1 à 3,

b représente un nombre entier de 1 à 3, et

c représente un nombre entier de 0 à 2,

la somme de a + b + c étant égale à 4, caractérisé en ce qu'on fait réagir des halogénosilanes de formule générale:

$$R_aSiHal_{b+c}$$

dans laquelle les substituants et les indices ont les significations indiquées ci-dessus, avec de l'urée, sans pression, dans des solvants polaires et à une température d'au moins 100° C.

2. Procédé suivant la revendication 1, caractérisé en ce que, comme solvants polaires, on utilise le Sulfolane et/ou des amides d'acides organiques liquides dans les conditions réactionnelles.

3. Procédé suivant les revendications 1 et 2, caractérisé en ce que, comme solvants, on utilise le Sulfolane, le diméthylformamide, la N-méthylpyrrolidone, la tétraméthylurée et/ou la tétraéthylurée.

4. Procédé suivant les revendications 1 à 3, caractérisé en ce que, comme halogénosilanes, on utilise ceux répondant à la formule mentionnée dans la revendication 1 et pour lesquels:

R représente un groupe méthyle,

Hal représente un atome de chlore, et

a, b, c ont les significations indiquées dans la revendication 1.